# EUROPEAN PATENT APPLICATION

(11) **EP 2 717 638 A2**
(43) Date of publication of application: **09.04.2014**
(21) Application number: 11795106.1
(22) Date of filing: 31.05.2011
(51) Int. Cl.: H04W 72/04

(54) **METHOD, DEVICE AND SYSTEM FOR DISTRIBUTING AND RELEASING SATELLITE BANDWIDTHS**

(71) Applicant: Huawei Technologies Co., Ltd., Shenzhen, Guangdong 518129 (CN)
(72) Inventor: ZHU, Xing, Guangdong 518129 (CN); ZOU, Chenggang, Guangdong 518129 (CN); SI, Weifeng, Guangdong 518129 (CN)
(74) Representative: Isarpatent
(86) International application number: PCT/CN2011/075036
(87) International publication number: WO 2011/157140

(57) **Abstract**

Embodiments of the present invention provide methods, devices, and a system for assigning and releasing satellite bandwidth and relate to the communications field, so that satellite bandwidth can be assigned and released in time, thereby ensuring effective bandwidth usage and saving bandwidth resources. The method for assigning bandwidth includes: before a user plane is established in a signaling interaction process for initiating a service, sending a bandwidth assignment request for the service to a satellite device connected through an interface, so as to assign satellite bandwidth for the service. The method for releasing bandwidth includes: before the user plane is released in a signaling interaction process for initiating the service, sending a bandwidth release request for the service to the satellite device connected through the interface, so as to release satellite bandwidth for the service. The embodiments of the present invention are applicable to satellite bandwidth assignment and release.

## Description

### TECHNICAL FIELD

The present invention relates to the communications field, and in particular, to methods, devices, and a system for assigning and releasing satellite bandwidth.

### BACKGROUND

During GSM (Global System of Mobile communication, Global System for Mobile Communications) network construction in some remote areas (such as a mountainous area, a desert, and an island), satellite transmission is generally used for a connection between a BTS (Base Transceiver Station, base transceiver station) and a BSC (Base Station Controller, base station controller); that is, a satellite relay is used to provide an Abis interface. A satellite transmission system that is currently in use is formed by a VSAT (Very Small Aperture Terminal, very small aperture terminal) small station and a HUB (hub) master station. During deployment, generally, a BTS is connected to a satellite VSAT small station, and a BSC is connected to a satellite HUB master station.

In one aspect, the cost for leasing satellite transmission bandwidth is rather high, and therefore effective management must be performed so as to implement efficient use. For example, when a service needs to use bandwidth, the bandwidth must be assigned to the service in time; and when the service is terminated, the bandwidth should be taken back in time.

In another aspect, a satellite in geosynchronous orbit is generally used for satellite transmission, and therefore the transmission delay is relatively long. Generally, a time of about 300 ms is required for sending data from a VSAT to a HUB through a satellite, and a round-trip delay is about 600 ms.

Currently, satellite bandwidth requesting/releasing is entirely completed by a satellite device (a VSAT small station/a HUB master station) through its detection mechanism. A VSAT collects statistics about the bandwidth that is currently in use within a certain statistics period and requests bandwidth from a HUB if it finds that there is insufficient bandwidth. Generally, a time of about 600 ms is required from requesting by the VSAT to the completion of bandwidth assignment. For the purpose of reducing the impact that the process for requesting bandwidth by the VSAT has on the service, a bandwidth reservation mechanism is generally used for satellite transmission, that is, the VSAT requests more bandwidth than that in practical use. The release is similar to this. When the HUB detects that bandwidth that is practically used within a certain period of time is smaller than the assigned bandwidth, it gradually releases the redundant bandwidth.

The VSAT periodically detects transmission bandwidth that is currently required in practice, and after it finds that there is insufficient bandwidth and requests bandwidth from the HUB master station, a time of about 600 ms is required before the requested bandwidth is obtained. In this period, because of bandwidth shortage, service data may be lost, thereby affecting service quality.

In addition, in a bandwidth reservation mechanism that is currently in use, when the VSAT requests bandwidth from the HUB, it requests more bandwidth than a practically measured value so as to reduce service data loss caused by a rather long application time. The bandwidth is not used in most cases, which is a waste of resources.

Similarly, when the HUB detects that the practically used satellite bandwidth is less than the assigned bandwidth within a certain period of time, it gradually releases the bandwidth that has not been occupied. However, in this way, bandwidth resources cannot be released in time, which also leads to a waste of bandwidth.

### SUMMARY

Various aspects of the present invention provide methods, devices, and a system for assigning and releasing satellite bandwidth, so as to assign and release satellite bandwidth in time, thereby ensuring effective bandwidth usage, and saving bandwidth resources.

In one aspect of the present invention, a method for assigning satellite bandwidth is provided, including:
before a user plane is established in a signaling interaction process for initiating a service, receiving, by a satellite device, a bandwidth assignment request sent by a base station subsystem device for the service; and
assigning, by the satellite device, satellite bandwidth for the service according to the bandwidth assignment request.

In another aspect of the present invention, a method for releasing satellite bandwidth is provided, including:
after a user plane is released in a signaling interaction process for terminating a service, receiving, by a satellite device, a bandwidth release request sent by a base station subsystem device for the service; and
releasing, by the satellite device according to the bandwidth release request, satellite bandwidth assigned for the service.

In another aspect of the present invention, a base station subsystem device is provided, including an interface unit and at least one of the following two units: a bandwidth assignment requesting unit and a bandwidth release requesting unit, where:
the interface unit is configured to connect a satellite device;
the bandwidth assignment requesting unit is configured to: before a user plane is established in a signaling interaction process for initiating a service, send a bandwidth assignment request for the service to the satellite device connected through the interface unit; and
the bandwidth release requesting unit is configured to: after the user plane is established in a signaling interaction process for terminating the service, send a bandwidth release request for the service to the satellite device connected through the interface unit.

In another aspect of the present invention, a satellite device is provided, including:
an interface unit, configured to connect a base station subsystem device; and
a receiving unit, configured to receive, through the interface unit, a bandwidth assignment request sent by the base station subsystem device; and receive, through the interface unit, a bandwidth release request sent by the base station subsystem device.

In another aspect of the present invention, a satellite transmission system is provided, including:
a base station subsystem device and a satellite device that are connected through an interface, where:
   the satellite device is configured to: before a user plane is established in a signaling interaction process for initiating a service, receive a bandwidth assignment request sent by the base station subsystem device for the service, and assign satellite bandwidth for the service according to the bandwidth assignment request; or after the user plane is released in a signaling interaction process for terminating the service, receive a bandwidth release request sent by the base station subsystem device for the service, and release, according to the bandwidth release request, satellite bandwidth assigned for the service; and
   the base station subsystem device is configured to: before the user plane is established in the signaling interaction process for initiating the service, send the bandwidth assignment request for the service to the satellite device; or after the user plane is released in the signaling interaction process for terminating the service, send the bandwidth release request for the service to the satellite device.

According to the methods, the devices, and the system for assigning and releasing satellite bandwidth that are provided in the embodiments of the present invention, satellite bandwidth can be assigned and released in time, thereby ensuring effective bandwidth usage and saving bandwidth resources.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of a method for assigning satellite bandwidth according to an embodiment of the present invention;
FIG. 2 is a schematic flowchart of a method for releasing satellite bandwidth according to another embodiment of the present invention;
FIG. 3 is a schematic diagram of a method for assigning and releasing satellite bandwidth according to still another embodiment of the present invention;
FIG. 4 is another schematic diagram of a method for assigning and releasing satellite bandwidth according to yet another embodiment of the present invention;
FIG. 5 is a schematic diagram of a method for assigning and releasing satellite bandwidth according to an embodiment of the present invention;
FIG. 6 is a schematic diagram of a method for assigning and releasing satellite bandwidth according to another embodiment of the present invention;
FIG. 7 is a schematic diagram of a method for assigning and releasing satellite bandwidth according to still another embodiment of the present invention;
FIG. 8 is a schematic diagram of a method for assigning and releasing satellite bandwidth according to yet another embodiment of the present invention;
FIG. 9 is a schematic structural diagram of a base station subsystem device according to an embodiment of the present invention;
FIG. 10 is a schematic structural diagram of a satellite device according to an embodiment of the present invention; and
FIG. 11 is a schematic structural diagram of a satellite transmission system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

For ease of description rather than setting a limitation, the following description proposes details such as a specific system structure, interface, and technology to facilitate thorough comprehension of the present invention. However, a person skilled in the art should understand that the present invention may also be implemented in other embodiments without these details. In other cases, detailed description about well-known apparatuses, circuits, and methods are omitted so as to prevent unnecessary details from detracting description of the present invention.

Various technologies described in the specification may be used in various wireless communications systems, for example, current 2G and 3G communications systems and next-generation systems, including a global system for mobile communications (GSM, Global System for Mobile communications) system, a code division multiple access (CDMA, Code Division Multiple Access) system, a time division multiple access (TDMA, Time Division Multiple Access) system, a wideband code division multiple access (WCDMA, Wideband Code Division Multiple Access Wireless) system, a frequency division multiple access (FDMA, Frequency Division Multiple Addressing) system, an orthogonal frequency-division multiple access (OFDMA, Orthogonal Frequency-Division Multiple Access) system, a single-carrier FDMA (SC-FDMA) system, a general packet radio service (GPRS, General Packet Radio Service) system, a long term evolution (LTE, Long Term Evolution) system, and the like.

The specification describes various aspects in combination with a terminal, a base station, and/or a base station controller.

The terminal may be a wireless terminal or a wired terminal. The wireless terminal may be a device that provides voice and/or data connectivity for a user, a handheld device that has a wireless connection function, or another device that connects to a wireless modem. The wireless terminal may communicate with one or more core networks through a radio access network (for example, RAN, Radio Access Network). The wireless terminal may be a mobile terminal, such as a mobile phone (or called a "cellular" phone) and a computer equipped with a mobile terminal, for example, may be a portable, pocket-size, handheld, computer-embedded, or vehicle-mounted mobile apparatus that exchanges voice and/or data with the radio access network. For example, the wireless terminal may be a personal communication service (PCS, Personal Communication Service) phone, a wireless phone, a session initiation protocol (SIP) phone set, a wireless local loop (WLL, Wireless Local Loop) station, or a personal digital assistant (PDA, Personal Digital Assistant). The wireless terminal may also be called a system, a subscriber unit (Subscriber Unit), a subscriber station (Subscriber Station), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, an access point) may be a device that communicates with the wireless terminal through one or more sectors on an air interface of an access network. The base station may be configured to perform mutual conversion of received air frames and IP packets and serves as a router between the wireless terminal and other parts of the access network, where the other parts of the access network may include an Internet Protocol (IP) network. The base station may also coordinate management of air interface attributes. For example, the base station may be a base transceiver station (BTS, Base Transceiver Station) in the GSM or CDMA, a NodeB (Node B) in the WCDMA, or an evolved NodeB (NodeB, eNB, or e-NodeB, evolutional Node B) in the LTE. The present invention does not set a limitation to this.

The base station controller may be a base station controller (BSC, base station controller) in the GSM or CDMA, or a radio network controller (RNC, Radio Network Controller) in the WCDMA. The present invention does not set a limitation to this.

In addition, the terms "system" and "network" in the specification may be used interchangeably in the specification. The term "and/or" in the specification describes only an association between associated objects and represents that three relationships may exist. For example, A and/or B may represent the following three cases: A exists alone, both A and B exist, and B exists alone. In addition, the symbol "/" in the specification usually represents that associated objects before and after the symbol are in an "or" relationship.

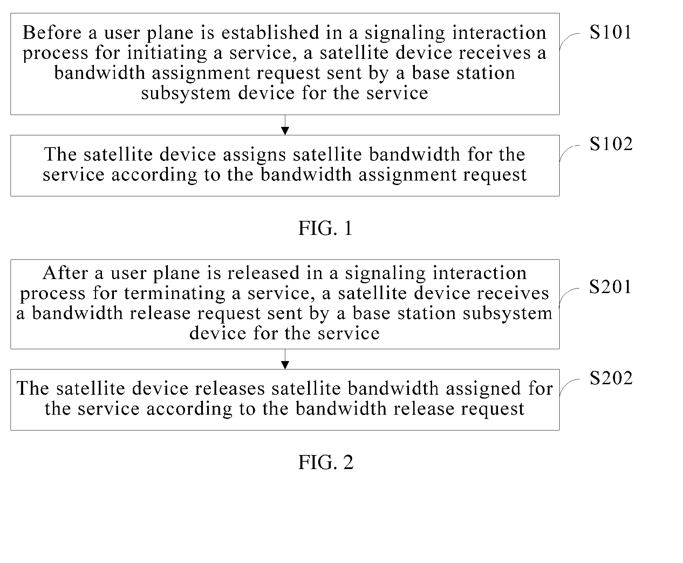

A method for assigning a satellite bandwidth according to an embodiment of the present invention is shown in FIG. 1.

S101. Before a user plane is established in a signaling interaction process for initiating a service, a satellite device receives a bandwidth assignment request sent by a base station subsystem device for the service.

For example, a TCP (Transmission Control Protocol, Transmission Control Protocol) connection may be established between a satellite device and a base station subsystem device to transmit a TCP packet, and this can ensure timely and reliable communication between the base station subsystem device and the satellite device.

The bandwidth assignment request may carry: identifiers of two communication parties, for example, IP endpoints, bandwidth that needs to be requested, and a service type of the service. Definitely, the two communication parties may also use other identifiers, and the present invention does not set a limitation to this.

An actual environment to which the "before a user plane is established" refers in step S101 may exemplarily be as follows: after the base station subsystem device receives an assignment request (Assignment Request) message sent by an MSC (Mobile Switching Center, mobile switching center); or after the base station subsystem device receives a channel activation Ack (Channel Activation Ack) message sent by a BTS. As to this, the embodiment of the present invention does not limit the "before a user plane is established" to after a specific message is received.

S102. The satellite device assigns satellite bandwidth for the service according to the bandwidth assignment request.

According to the method for assigning satellite bandwidth provided in this embodiment of the present invention, before a user plane is established in a signaling interaction process for initiating a service, a satellite device receives a bandwidth assignment request sent by a base station subsystem device for the service; and the satellite device assigns satellite bandwidth for the service according to the bandwidth assignment request. In this way, as to assignment of satellite bandwidth required by a service, the satellite bandwidth is assigned in time before a user plane of the service is established, instead of being requested by a VSAT after detection in the prior art. This avoids data loss resulting from time spent in satellite transmission in a bandwidth application process, guarantees service quality, and ensures effective bandwidth usage. In addition, because no bandwidth is reserved, this further saves bandwidth resources.

In this embodiment, when the base station subsystem device is a BTS, the satellite device is a VSTA; and in another embodiment of the present invention, when the base station subsystem device is a BSC, the satellite device is a HUB.

A BSC and a HUB are taken as an example. If an interface thereof is based on the IPv4 protocol, a format of the bandwidth assignment request message thereof may be shown in Table 1.

**Table 1**

| 8 | 7 | 6 | 5 | 4 | 3 | 2 | 1 | |
|---|---|---|---|---|---|---|---|---|
| Element identifier = 0000 0001 | | | | | | | | octet 1 |
| Element identifier = 0000 0001 | | | | | | | | octet 1 |
| Length = 14 | | | | | | | | octet 2 |
| Length = 14 | | | | | | | | octet 2 |
| IPv4 Address 1 (MSByte first - LSByte last) | | | | | | | | octet 3-6 |
| IPv4 Address 1 (MSByte first - LSByte last) | | | | | | | | octet 3-6 |
| UDP Port Value 1 (MSByte first - LSByte last) | | | | | | | | octet 7-8 |
| UDP Port Value 1 (MSByte first - LSByte last) | | | | | | | | octet 7-8 |
| IPv4 Address 2 (MSByte first - LSByte last) | | | | | | | | octet 9-12 |
| IPv4 Address 2 (MSByte first - LSByte last) | | | | | | | | octet 9-12 |
| UDP Port Value 2 (MSByte first - LSByte last) | | | | | | | | octet 13-14 |
| UDP Port Value 2 (MSByte first - LSByte last) | | | | | | | | octet 13-14 |
| Bandwidth Requested | | | | | | | | Octet 15 |
| Bandwidth Requested | | | | | | | | Octet 15 |
| Spare | | | | | | SType | | Octet 16 |
| Spare | | | | | | Type | | Octet 16 |

If an interface between the BSC and the HUB is based on the IPv6 protocol, a format of the bandwidth assignment request message thereof may be shown in Table 2.

**Table 2**

| 8 | 7 | 6 | 5 | 4 | 3 | 2 | 1 | |
|---|---|---|---|---|---|---|---|---|
| Element identifier = 0000 0001 | | | | | | | | octet 1 |
| Element identifier = 0000 0001 | | | | | | | | octet 1 |
| Length = 38 | | | | | | | | octet 2 |
| Length = 38 | | | | | | | | octet 2 |
| IPv6 Address 1 (MSByte first - LSByte last) | | | | | | | | octet 3-18 |
| IPv6 Address 1 (MSByte first - LSByte last) | | | | | | | | octet 3-18 |
| UDP Port Value 1 (MSByte first - LSByte last) | | | | | | | | octet 19-20 |
| UDP Port Value 1 (MSByte first - LSByte last) | | | | | | | | octet 19-20 |
| IPv6 Address 2 (MSByte first - LSByte last) | | | | | | | | octet 21-36 |
| IPv6 Address 2 (MSByte first - LSByte last) | | | | | | | | octet 21-36 |
| UDP Port Value 2 (MSByte first - LSByte last) | | | | | | | | octet 37-38 |
| UDP Port Value 2 (MSByte first - LSByte last) | | | | | | | | octet 37-38 |
| Bandwidth Requested | | | | | | | | Octet 39 |
| Bandwidth Requested | | | | | | | | Octet 39 |
| Spare | | | | | | SType | | Octet 40 |
| Spare | | | | | | Type | | Octet 40 |

IPv4 and IPv6 are distinguished by the length of a message.

Requested bandwidth = The value of a binary number corresponding to the Bandwidth Requested field x 1 k.

The values of SType may be:
00: indicates a CS voice service.
01: indicates a CS data service.
10: indicates a PS service.
11: indicates reserved.

As to a bandwidth assignment request acknowledgment message returned by the HUB to the BSC, a format of the message thereof may be similar to the above. A difference lies in that the message code is 0000 0010. Meanwhile, a bandwidth field is satellite transmission bandwidth actually assigned by the HUB.

A method for releasing satellite bandwidth according to another embodiment of the present invention is shown in FIG. 2.

S201. After a user plane is released in a signaling interaction process for terminating a service, a satellite device receives a bandwidth release request sent by a base station subsystem device for the service.

For example, a TCP connection may be established between a satellite device and a base station subsystem device to transmit a TCP packet, and this can ensure timely and reliable communication between the base station subsystem device and the satellite device.

The bandwidth release request may carry identifiers of two communication parties, for example, IP endpoints. Definitely, the two communication parties may also use other identifiers, and the present invention does not set a limitation to this.

An actual environment to which the "after a user plane is released" refers in S201 may exemplarily be as follows: after the base station subsystem device receives a clear command (Clear Command) message sent by an MSC; or after the base station subsystem device receives a handover complete (Handover Complete) message sent by a BTS. As to this, this embodiment of the present invention does not limit the "after a user plane is released" to after a specific message is received.

S202. The satellite device releases, according to the bandwidth release request, satellite bandwidth assigned for the service.

According to the method for releasing satellite bandwidth provided in this embodiment of the present invention, after a user plane is released in a signaling interaction process for terminating a service, a satellite device receives a bandwidth release request sent by a base station subsystem device for the service; and the satellite device releases, according to the bandwidth release request, satellite bandwidth assigned for the service. In this way, as to release of service satellite bandwidth, the satellite bandwidth is released in time after a user plane of a service is released, instead of being gradually released by a HUB after detection in the prior art, thereby saving bandwidth resources.

In this embodiment, when the base station subsystem device is a BTS, the satellite device is a VSTA; and in another embodiment of the present invention, when the base station subsystem device is a BSC, the satellite device is a HUB.

A BSC and a HUB are taken as an example. If an interface thereof is based on the IPv4 protocol, a format of the bandwidth release request message thereof may be shown in Table 3.

**Table 3**

| 8 | 7 | 6 | 5 | 4 | 3 | 2 | 1 | |
|---|---|---|---|---|---|---|---|---|
| Element identifier = 0000 0011 | | | | | | | | octet 1 |
| Element identifier = 0000 0011 | | | | | | | | octet 1 |
| Length = 12 | | | | | | | | octet 2 |
| Length = 12 | | | | | | | | octet 2 |
| IPv4 Address 1 (MSByte first - LSByte last) | | | | | | | | octet 3-6 |
| IPv4 Address 1 (MSByte first - LSByte last) | | | | | | | | octet 3-6 |
| UDP Port Value 1 (MSByte first - LSByte last) | | | | | | | | octet 7-8 |
| UDP Port Value 1 (MSByte first - LSByte last) | | | | | | | | octet 7-8 |
| IPv4 Address 2 (MSByte first - LSByte last) | | | | | | | | octet 9-12 |
| IPv4 Address 2 (MSByte first - LSByte last) | | | | | | | | octet 9-12 |
| UDP Port Value 2 (MSByte first - LSByte last) | | | | | | | | octet 13-14 |
| UDP Port Value 2 (MSByte first - LSByte last) | | | | | | | | octet 13-14 |

If an interface between the BSC and the HUB is based on the IPv6 protocol, a format of the bandwidth release request message thereof may be shown in Table 4.

**Table 4**

| 8 | 7 | 6 | 5 | 4 | 3 | 2 | 1 | |
|---|---|---|---|---|---|---|---|---|
| Element identifier = 0000 0011 | | | | | | | | octet 1 |
| Element identifier = 0000 0011 | | | | | | | | octet 1 |
| Length = 36 | | | | | | | | octet 2 |
| Length = 36 | | | | | | | | octet 2 |
| IPv6 Address 1 (MSByte first - LSByte last) | | | | | | | | octet 3-18 |
| IPv6 Address 1 (MSByte first - LSByte last) | | | | | | | | octet 3-18 |
| UDP Port Value 1 (MSByte first - LSByte last) | | | | | | | | octet 19-20 |
| UDP Port Value 1 (MSByte first - LSByte last) | | | | | | | | octet 19-20 |
| IPv6 Address 2 (MSByte first - LSByte last) | | | | | | | | octet 21-36 |
| IPv6 Address 2 (MSByte first - LSByte last) | | | | | | | | octet 21-36 |
| UDP Port Value 2 (MSByte first - LSByte last) | | | | | | | | octet 37-38 |
| UDP Port Value 2 (MSByte first - LSByte last) | | | | | | | | octet 37-38 |

After the HUB receives the release request, it releases bandwidth previously occupied by the service and returns a release request acknowledgment message. A message code of the release request acknowledgment message may be 0000 0100.

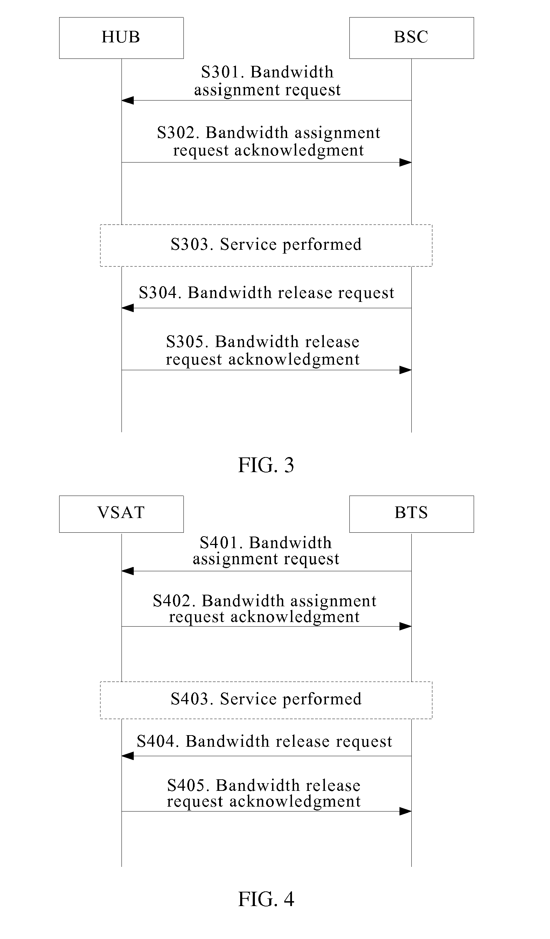

In summary, in another embodiment of the present invention, if the base station subsystem device is a BSC, and the satellite device is a HUB, satellite bandwidth thereof is assigned and released as shown in FIG. 3.

S301. Before a user plane of a service is established, a BSC sends a bandwidth assignment request that carries identifiers of two communication parties, bandwidth that needs to be requested, and a service type to a HUB connected through an interface.

S302. The HUB returns a bandwidth assignment request acknowledgment to the BSC.

S303. Perform the service.

S304. After the user plane of the service is released, the BSC sends a bandwidth release request for the service to the HUB, where the bandwidth release request carries the identifiers of the two communication parties.

S305. The BSC returns a bandwidth release request acknowledgment to the HUB.

When the base station subsystem device is a BTS, and the satellite device is a VSAT, satellite bandwidth thereof is assigned and released as shown in FIG. 4.

S401. Before a user plane of a service is established, a BTS sends a bandwidth assignment request that carries identifiers of two communication parties, bandwidth that needs to be requested, and a service type to a VSAT connected through an interface.

S402. The VSAT returns a bandwidth assignment request acknowledgment to the BTS.

S403. Perform the service.

S404. After the user plane of the service is released, the BTS sends a bandwidth release request for the service to the VSAT, where the bandwidth release request carries the identifiers of the two communication parties.

S405. The VSAT returns a bandwidth release request acknowledgment to the BTS.

According to the methods, the devices, and the system for assigning and releasing satellite bandwidth that are provided in the embodiments of the present invention, satellite bandwidth can be assigned and released in time, thereby ensuring effective bandwidth usage and saving bandwidth resources.

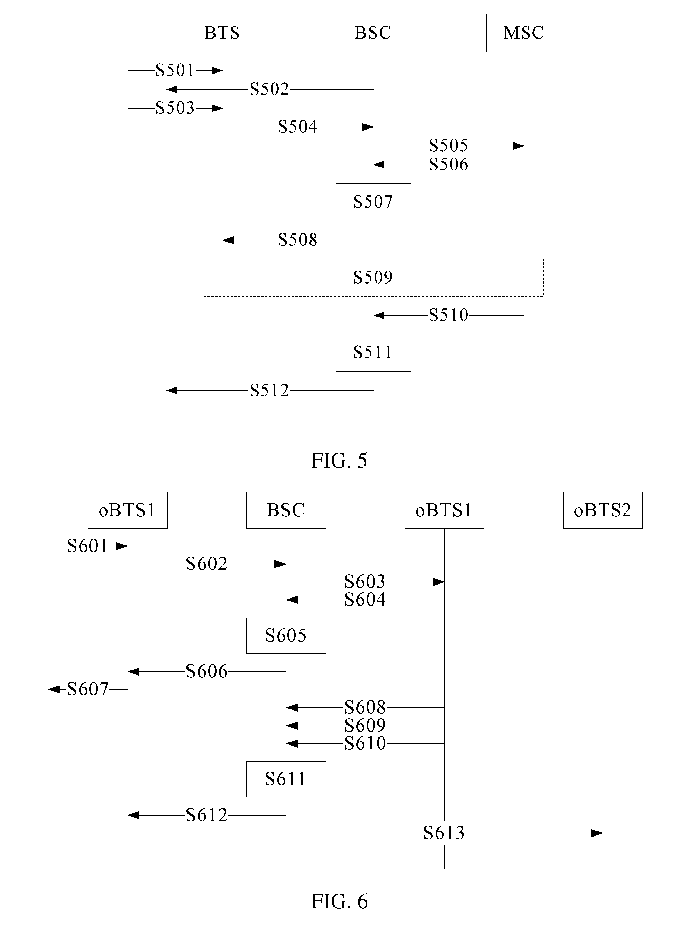

A method for assigning and releasing satellite bandwidth according to still another embodiment of the present invention is described by taking a call process where a BSC selects a suitable opportunity to request satellite bandwidth from a HUB master station and request the HUB master station to release the satellite bandwidth as an example, as shown in FIG. 5.

S501. A calling terminal sends a channel request (Channel Request) to a BTS.

S502. The BSC performs assignment (Immediate Assignment) through the BTS.

S503. The calling terminal initiates a service request (CM Service Request) to the BTS.

S504. The BTS sends the service request to the BSC.

S505. The BSC sends a service request (Complete Layer 3 Message) to an MSC (Mobile Switching Center, mobile switching center).

S506. The MSC returns an assignment request (Assignment Request) to the BSC.

S507. After receiving the assignment request (Assignment Request) message, the BSC sends a bandwidth assignment request to a HUB connected through an interface, so as to assign satellite bandwidth for the call service in time.

In this embodiment, satellite bandwidth required by a call service is requested by the BSC for assignment in time before a user plane of the service is established in a signaling interaction process for initiating the service, instead of being requested by a VSAT after detection in the prior art, thereby avoiding data loss resulting from time spent in satellite transmission in a bandwidth application process, guaranteeing service quality, and ensuring effective bandwidth usage.

S508. After the satellite bandwidth is assigned, the BSC sends an assignment command (Assignment Command) of the call service to the BTS.

S509. A call connection is established between the BTS and the MSC.

S510. After the call is terminated, the MSC sends a clear command (Clear Command) to the BSC.

S511. After receiving the clear command (Clear Command), the BSC sends a bandwidth release request to the HUB connected through the interface, so as to release the assigned satellite bandwidth in time.

In this embodiment, service satellite bandwidth is requested by the BSC for release in time after the user plane of the service is released in a signaling interaction process for terminating the service, instead of being gradually released by the HUB after detection in the prior art, thereby saving satellite bandwidth resources.

S512. The BSC performs channel release (Channel Release) through the BTS.

In this embodiment, the BSC requests the HUB master station to assign bandwidth after receiving the assignment request message sent by the MSC in S507; and requests the HUB master station to release bandwidth after receiving the clear command sent by the MSC in S511.

That the BSC selects a suitable opportunity to request the HUB master station to assign and release satellite bandwidth is only an example, and this embodiment of the present invention is not limited to this. Bandwidth application may also be performed in an opportunity before the user plane is established in other signaling interaction processes for initiating a service. Likewise, bandwidth release may also be performed in an opportunity after the user plane is released in other signaling interaction processes for terminating a service.

According to the method for assigning and releasing satellite bandwidth provided in this embodiment of the present invention, before a user plane is established in a signaling interaction process for initiating a service, a satellite device (HUB) receives a bandwidth assignment request sent by a base station subsystem device (BSC) for the service; and the satellite device (HUB) assigns satellite bandwidth for the service according to the bandwidth assignment request. After the user plane is released in a signaling interaction process for terminating the service, the satellite device (HUB) receives a bandwidth release request sent by the base station subsystem device (BSC) for the service; and the satellite device (HUB) releases, according to the bandwidth release request, satellite bandwidth assigned for the service. In this way, assignment and release of satellite bandwidth required by a service is no longer implemented through a detection mechanism of the satellite device itself in the prior art. Instead, the satellite bandwidth is assigned before a user plane of the service is established, and the satellite bandwidth is released after the user plane is released. As a result, the satellite bandwidth can be assigned and released in time, thereby ensuring effective bandwidth usage and saving bandwidth resources.

A method for assigning and releasing satellite bandwidth according to an embodiment of the present invention is described by taking an intra-BSC handover process where a BSC selects a suitable opportunity to request satellite bandwidth from a HUB master station and request the HUB master station to release the satellite bandwidth as an example. It is assumed that a call is established between an oMS and a tMS. The terminal oMS is handed over from an oBTS1 to an oBTS2. A tBTS maintains the call for the tMS, and the process thereof is shown in FIG. 6.

S601. The terminal oMS sends a measurement report (Measurement Report) to the oBTS1.

S602. The oBTS1 sends a measurement result to the BSC (Pre_measurement Result).

S603. The BSC sends a channel activation message (Channel Activation) to the oBTS2.

S604. The oBTS2 returns a channel activation Ack (Channel Activation Ack) to the BSC.

S605. After receiving the channel activation Ack (Channel Activation Ack), the BSC sends a bandwidth assignment request to a HUB connected through an interface, so as to assign satellite bandwidth for the call service in time.

In this embodiment, satellite bandwidth required by a service is requested by the BSC for assignment in time before a user plane of the service is established in a signaling interaction process for initiating the service, instead of being requested by a VSAT after detection in the prior art, thereby avoiding data loss resulting from time spent in satellite transmission in a bandwidth application process, guaranteeing service quality, and ensuring effective bandwidth usage.

S606. The BSC sends a handover command (Handover Command) to the oBTS1.

S607. The oBTS1 sends the handover command (Handover Command) to the terminal oMS.

S608. The oBTS2 sends handover detect information (Handover Detect) to the BSC.

S609. The oBTS2 sends an establish indication (Establish Indication) to the BSC.

S610. The oBTS2 sends a handover complete message (Handover Complete) to the BSC.

S611. After receiving the handover complete message (Handover Complete), the BSC sends a bandwidth release request to the HUB connected through the interface, so as to release the assigned satellite bandwidth in time.

In this embodiment, service satellite bandwidth is requested by the BSC for release in time after the user plane of the service is released in a signaling interaction process for terminating the service, instead of being gradually released by the HUB after detection in the prior art, thereby saving satellite bandwidth resources.

S612. The BSC sends a release request (Release Request) to the oBTS1.

S613. The BSC sends a handover performed message (Handover Performed) to the MSC.

In this embodiment, the BSC requests bandwidth that the oBTS2 needs to use from the HUB master station after receiving the channel activation Ack sent by the oBTS2 in S605; and requests the HUB master station to release the bandwidth after receiving the handover complete message sent by the oBTS2 in S611.

That the BSC selects a suitable opportunity to request the HUB master station to assign and release satellite bandwidth is only an example, and this embodiment of the present invention is not limited to this. Bandwidth application may also be performed in an opportunity before the user plane is established in other signaling interaction processes for initiating a service. Likewise, bandwidth release may also be performed in an opportunity after the user plane is released in other signaling interaction processes for terminating a service.

According to the method for assigning and releasing satellite bandwidth provided in this embodiment of the present invention, before a user plane is established in a signaling interaction process for initiating a service, a satellite device (HUB) receives a bandwidth assignment request sent by a base station subsystem device (BSC) for the service; and the satellite device (HUB) assigns satellite bandwidth for the service according to the bandwidth assignment request. After the user plane is released in a signaling interaction process for terminating the service, the satellite device (HUB) receives a bandwidth release request sent by the base station subsystem device (BSC) for the service; and the satellite device (HUB) releases, according to the bandwidth release request, satellite bandwidth assigned for the service. In this way, assignment and release of satellite bandwidth required by a service is no longer implemented through a detection mechanism of the satellite device itself in the prior art. Instead, the satellite bandwidth is assigned before a user plane of the service is established, and the satellite bandwidth is released after the user plane is released. As a result, the satellite bandwidth can be assigned and released in time, thereby ensuring effective bandwidth usage and saving bandwidth resources.

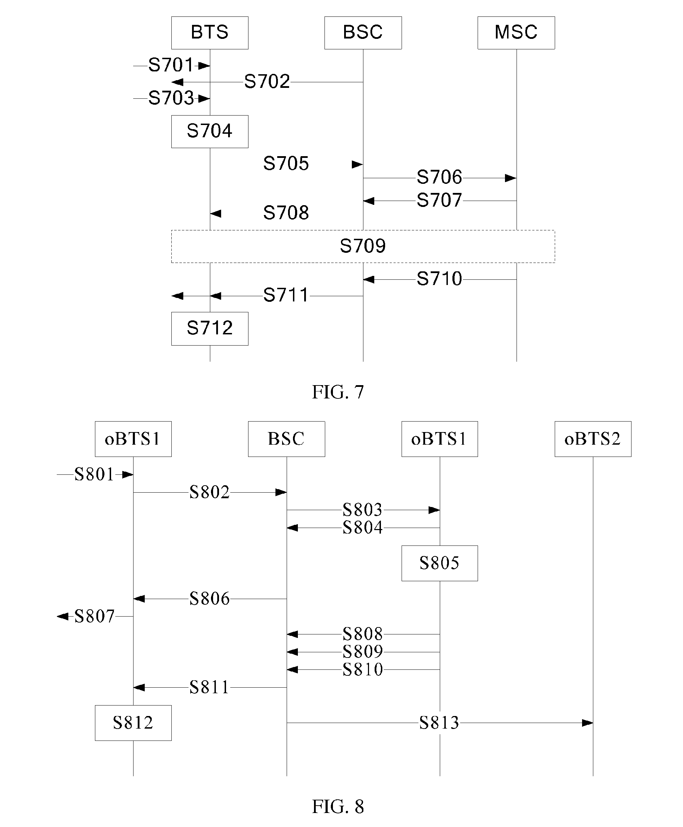

A method for assigning and releasing satellite bandwidth according to another embodiment of the present invention is described by taking a call process where a BTS selects a suitable opportunity to request satellite bandwidth from a VAST small station and request the VSAT small station to release the satellite bandwidth as an example, as shown in FIG. 7.

S701. A calling terminal sends a channel request (Channel Request) to the BTS.

S702. A BSC performs assignment (Immediate Assignment) through the BTS.

S703. The calling terminal initiates a service request (CM Service Request) to the BTS.

S704. After receiving the service request (CM Service Request), the BTS sends a bandwidth assignment request to a VSAT connected through an interface, so as to assign satellite bandwidth for the call service in time.

In this embodiment, satellite bandwidth required by a call service is requested by the BTS for assignment in time before a user plane of the service is established in a signaling interaction process for initiating the service, instead of being requested by a VSAT after detection in the prior art, thereby avoiding data loss resulting from time spent in satellite transmission in a bandwidth application process, guaranteeing service quality, and ensuring effective bandwidth usage.

S705. The BTS sends the service request to the BSC.

S706. The BSC sends a service request (Complete Layer 3 Message) to an MSC.

S707. The MSC returns an assignment request (Assignment Request) to the BSC.

S708. The BSC sends an assignment command (Assignment Command) of the call service to the BTS.

S709. The BTS establishes a call connection with the MSC.

S710. After the call is terminated, the MSC sends a clear command (Clear Command) to the BSC.

S711. The BSC sends a channel release message (Channel Release) to the BTS.

S712. After receiving the channel release message (Channel Release), the BTS sends a bandwidth release request to the VSAT small station connected through the interface, so as to release the assigned satellite bandwidth in time.

In this embodiment, as to release of service satellite bandwidth, the satellite bandwidth is released in time after a user plane of a service is released, instead of being gradually released by a HUB after detection in the prior art, thereby saving bandwidth resources.

In this embodiment, the BTS requests the VSAT small station to assign bandwidth after receiving the service request sent by the calling terminal in S704; and requests the VSAT small station to release the bandwidth after receiving the channel release message sent by the BSC in S712.

That the BTS selects a suitable opportunity to request the VSAT small station to assign and release satellite bandwidth is only an example, and this embodiment of the present invention is not limited to this. Bandwidth application may also be performed in an opportunity before the user plane is established in other signaling interaction processes for initiating a service. Likewise, bandwidth release may also be performed in an opportunity after the user plane is released in other signaling interaction processes for terminating a service.

According to the method for assigning and releasing satellite bandwidth provided in this embodiment of the present invention, before a user plane is established in a signaling interaction process for initiating a service, a satellite device (VSAT) receives a bandwidth assignment request sent by a base station subsystem device (BTS) for the service; and the satellite device (VSAT) assigns satellite bandwidth for the service according to the bandwidth assignment request. After the user plane is released in a signaling interaction process for terminating the service, the satellite device (VSAT) receives a bandwidth release request sent by the base station subsystem device (BTS) for the service; and the satellite device (VSAT) releases, according to the bandwidth release request, satellite bandwidth assigned for the service. In this way, assignment and release of satellite bandwidth required by a service is no longer implemented through a detection mechanism of the satellite device itself in the prior art. Instead, the satellite bandwidth is assigned before a user plane of the service is established, and the satellite bandwidth is released after the user plane is released. As a result, the satellite bandwidth can be assigned and released in time, thereby ensuring effective bandwidth usage and saving bandwidth resources.

A method for assigning and releasing satellite bandwidth according to yet another embodiment of the present invention is described by taking an intra-BSC handover process where a BTS selects a suitable opportunity to request satellite bandwidth from a VSAT small station and request the VSAT small station to release the satellite bandwidth as an example. It is assumed that a call is established between an oMS and a tMS. The terminal oMS is handed over from an oBTS1 to an oBTS2. A tBTS maintains the call for the tMS, and the process thereof is shown in FIG. 8.

S801. The terminal oMS sends a measurement report (Measurement Report) to the oBTS1.

S802. The oBTS1 sends a measurement result to the BSC (Pre_measurement Result).

S803. The BSC sends a channel activation message (Channel Activation) to the oBTS2.

S804. The oBTS2 returns a channel activation Ack (Channel Activation Ack) to the BSC.

S805. The oBTS2 sends a bandwidth assignment request to a VSAT small station connected through an interface, so as to assign satellite bandwidth for the call service in time.

In this embodiment, satellite bandwidth required by a service is requested by the oBTS2 for assignment in time before a user plane of the service is established in a signaling interaction process for initiating the service, instead of being requested by a VSAT after detection in the prior art, thereby avoiding data loss resulting from time spent in satellite transmission in a bandwidth application process, guaranteeing service quality, and ensuring effective bandwidth usage.

S806. The BSC sends a handover command (Handover Command) to the oBTS1.

S807. The oBTS1 sends the handover command (Handover Command) to the terminal oMS.

S808. The oBTS2 sends handover detect information (Handover Detect) to the BSC.

S809. The oBTS2 sends an establish indication (Establish Indication) to the BSC.

S810. The oBTS2 sends a handover complete message (Handover Complete) to the BSC.

S811. The BSC sends a release request (Release Request) to the oBTS1.

S812. After receiving the release request (Release Request), the oBTS1 sends a bandwidth release request to the VSAT small station connected through the interface, so as to release the assigned satellite bandwidth in time.

In this embodiment, service satellite bandwidth is requested by the oBTS1 for release in time after the user plane of the service is released in a signaling interaction process for terminating the service, instead of being gradually released by a HUB after detection in the prior art, thereby saving satellite bandwidth resources.

S813. The BSC sends a handover performed message (Handover Performed) to the MSC.

In this embodiment, the oBTS2 request bandwidth that needs to be used from the VSAT small station after receiving the channel activation Ack returned by the BSC in S804; and the oBTS1 requests the VSAT small station to release the bandwidth after receiving the release request sent by the BSC in S811.

That the BTS selects a suitable opportunity to request the VSAT small station to assign and release satellite bandwidth is only an example, and this embodiment of the present invention is not limited to this. Bandwidth application may also be performed in an opportunity before the user plane is established in other signaling interaction processes for initiating a service. Likewise, bandwidth release may also be performed in an opportunity after the user plane is released in other signaling interaction processes for terminating a service.

According to the method for assigning and releasing satellite bandwidth provided in this embodiment of the present invention, before a user plane is established in a signaling interaction process for initiating a service, a satellite device (VSAT) receives a bandwidth assignment request sent by a base station subsystem device (BTS) for the service; and the satellite device (VSAT) assigns satellite bandwidth for the service according to the bandwidth assignment request. After the user plane is released in a signaling interaction process for terminating the service, the satellite device (VSAT) receives a bandwidth release request sent by the base station subsystem device (BTS) for the service; and the satellite device (VSAT) releases, according to the bandwidth release request, satellite bandwidth assigned for the service. In this way, assignment and release of satellite bandwidth required by a service is no longer implemented through a detection mechanism of the satellite device itself in the prior art. Instead, the satellite bandwidth is assigned before a user plane of the service is established, and the satellite bandwidth is released after the user plane is released. As a result, the satellite bandwidth can be assigned and released in time, thereby ensuring effective bandwidth usage and saving bandwidth resources.

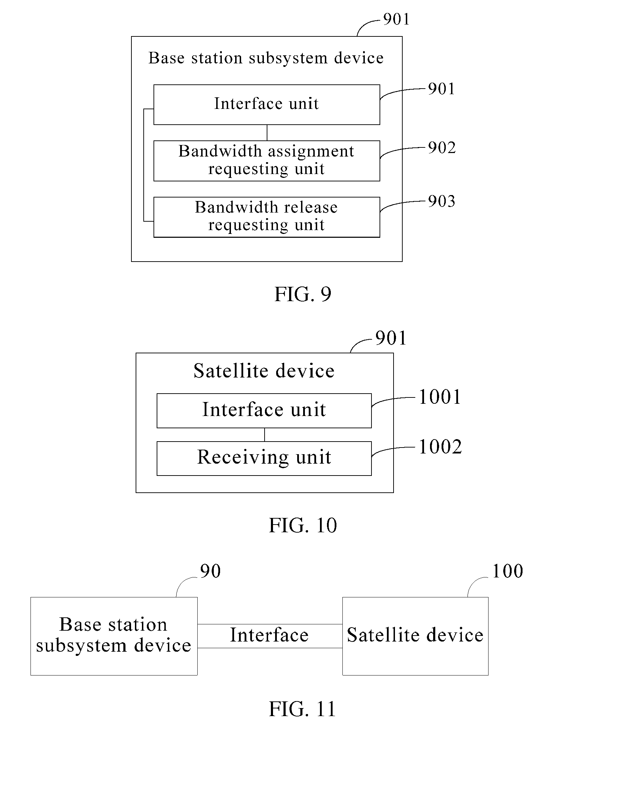

A base station subsystem device 90 according to an embodiment of the present invention includes an interface unit 901 and a bandwidth assignment requesting unit 902, as shown in FIG. 9. In another embodiment of the present invention, the base station subsystem device 90 may include an interface unit 901 and a bandwidth release requesting unit 903. In another embodiment of the present invention, the base station subsystem device 90 may include an interface unit 901, a bandwidth assignment requesting unit 902, and a bandwidth release requesting unit 903.

The interface unit 901 is configured to connect a satellite device.

The bandwidth assignment requesting unit 902 is configured to: before a user plane is established in a signaling interaction process for initiating a service, send a bandwidth assignment request for the service to the satellite device connected through the interface unit 901, so as to assign satellite bandwidth for the service.

The bandwidth release requesting unit 903 is configured to: before a user plane is established in a signaling interaction process for terminating the service, send a bandwidth release request for the service to the satellite device connected through the interface unit 901, so as to release satellite bandwidth assigned for the service.

For example, when the satellite device is a HUB, the base station subsystem device 90 is a base station controller BSC; or when the satellite device is a VSAT, the base station subsystem device 90 is a base station BTS.

The base station subsystem device provided in this embodiment of the present invention, before a user plane is established in a signaling interaction process for initiating a service, sends a bandwidth assignment request for the service to a satellite device connected through an interface, so as to assign satellite bandwidth for the service; and after the user plane is released in a signaling interaction process for terminating the service, sends a bandwidth release request for the service to the satellite device connected through the interface, so as to release satellite bandwidth assigned for the service. In this way, assignment and release of satellite bandwidth required by a service is no longer implemented through a detection mechanism of the satellite device itself in the prior art. Instead, the satellite bandwidth is assigned before a user plane of the service is established, and the satellite bandwidth is released after the user plane is released. As a result, the satellite bandwidth can be assigned and released in time, thereby ensuring effective bandwidth usage and saving bandwidth resources.

A satellite device 100 provided in an embodiment of the present invention includes an interface unit 1001 and a receiving unit 1002, as shown in FIG. 10.

The interface unit 1001 is configured to connect a base station subsystem device.

The receiving unit 1002 is configured to receive, through the interface unit 1001, a bandwidth assignment request sent by the base station subsystem device; and receive, through the interface unit 1001, a bandwidth release request sent by the base station subsystem device.

For example, when the base station subsystem device is a BSC, the satellite device 100 is a HUB; and when the base station subsystem device is a BTS, the satellite device 100 is a VSAT.

According to the satellite device provided in this embodiment of the present invention, before a user plane is established in a signaling interaction process for initiating a service, a bandwidth assignment request sent by a base station subsystem device is received through an interface; and a bandwidth release request sent by the base station subsystem device is received through the interface unit. In this way, assignment and release of satellite bandwidth required by a service is no longer implemented through a detection mechanism of the satellite device itself in the prior art. Instead, the satellite bandwidth is assigned before a user plane of the service is established, and the satellite bandwidth is released after the user plane is released. As a result, the satellite bandwidth can be assigned and released in time, thereby ensuring effective bandwidth usage and saving bandwidth resources.

A satellite transmission system provided in an embodiment of the present invention includes a base station subsystem device 90 and a satellite device 100 that are connected through an interface, as shown in FIG. 11.

The satellite device 100 is configured to: before a user plane is established in a signaling interaction process for initiating a service, receive a bandwidth assignment request sent by the base station subsystem device 90 for the service, and assign satellite bandwidth for the service according to the bandwidth assignment request; or after the user plane is released in a signaling interaction process for terminating the service, receive a bandwidth release request sent by the base station subsystem device 90 for the service, and release, according to the bandwidth release request, satellite bandwidth assigned for the service.

The base station subsystem device 90 is configured to: before the user plane is established in the signaling interaction process for initiating the service, send the bandwidth assignment request for the service to the satellite device 100; or after the user plane is released in the signaling interaction process for terminating the service, send the bandwidth release request for the service to the satellite device 100.

According to the satellite transmission system provided in this embodiment of the present invention, before a user plane is established in a signaling interaction process for initiating a service, a satellite device receives a bandwidth assignment request sent by a base station subsystem device for the service; and the satellite device assigns satellite bandwidth for the service according to the bandwidth assignment request. After the user plane is released in a signaling interaction process for terminating the service, the satellite device receives a bandwidth release request sent by the base station subsystem device for the service; and the satellite device, according to the bandwidth release request, releases satellite bandwidth assigned for the service. In this way, assignment and release of satellite bandwidth required by a service is no longer implemented through a detection mechanism of the satellite device itself in the prior art. Instead, the satellite bandwidth is assigned before a user plane of the service is established, and the satellite bandwidth is released after the user plane is released. As a result, the satellite bandwidth can be assigned and released in time, thereby ensuring effective bandwidth usage and saving bandwidth resources.

It may be clearly understood by persons skilled in the art that, for the purpose of convenient and brief description, for a detailed working process of the foregoing system, apparatus, and unit, reference may made to the corresponding process in the foregoing method embodiments, and the details will not be described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program codes, such as a USB flash disk, a removable hard disk, a read-only memory (ROM, Read-Only Memory), a random access memory (RAM, Random Access Memory), a magnetic disk, or an optical disk.

It should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, as long as the modifications and replacements do not cause the essence of corresponding technical solutions to depart from the spirit and scope of the technical solutions of the embodiments of the present invention.

## Claims

1. A method for assigning satellite bandwidth, comprising:
before a user plane is established in a signaling interaction process for initiating a service, receiving, by a satellite device, a bandwidth assignment request sent by a base station subsystem device for the service; and
assigning, by the satellite device, satellite bandwidth for the service according to the bandwidth assignment request.

2. The method according to claim 1, wherein a transmission control protocol connection is established between the satellite device and the base station subsystem device.

3. The method according to claim 1 or 2, wherein the bandwidth assignment request comprises: identifiers of two communication parties, bandwidth that needs to be requested, and a service type of the service.

4. The method according to claim 1, wherein the satellite device comprises: a hub HUB or a very small aperture terminal VSAT.

5. A method for releasing satellite bandwidth, comprising:
after a user plane is released in a signaling interaction process for terminating a service, receiving, by a satellite device, a bandwidth release request sent by a base station subsystem device for the service; and
releasing, by the satellite device according to the bandwidth release request, satellite bandwidth assigned for the service.

6. The method according to claim 5, wherein a transmission control protocol connection is established between the satellite device and the base station subsystem device.

7. The method according to claim 5 or 6, wherein the bandwidth release request comprises: identifiers of two communication parties.

8. The method according to claim 5, wherein the satellite device comprises: a hub HUB or a very small aperture terminal VSAT.

9. A base station subsystem device, comprising an interface unit and at least one of the following two units: a bandwidth assignment requesting unit and a bandwidth release requesting unit, wherein:
the interface unit is configured to connect a satellite device;
the bandwidth assignment requesting unit is configured to: before a user plane is established in a signaling interaction process for initiating a service, send a bandwidth assignment request for the service to the satellite device connected through the interface unit; and
the bandwidth release requesting unit is configured to: after the user plane is established in a signaling interaction process for terminating the service, send a bandwidth release request for the service to the satellite device connected through the interface unit.

10. The base station subsystem device according to claim 9, wherein:
when the satellite device is a HUB, the base station subsystem device is a base station controller BSC; or
when the satellite device is a VSAT, the base station subsystem device is a base station BTS.

11. A satellite device, comprising:
an interface unit, configured to connect a base station subsystem device; and
a receiving unit, configured to receive, through the interface unit, a bandwidth assignment request sent by the base station subsystem device; and receive, through the interface unit, a bandwidth release request sent by the base station subsystem device.

12. The satellite device according to claim 11, wherein:
when the base station subsystem device is a BSC, the satellite device is a HUB; or
when the base station subsystem device is a BTS, the satellite device is a VSAT.

13. A satellite transmission system, comprising:
a base station subsystem device and a satellite device that are connected through an interface, wherein:
the satellite device is configured to: before a user plane is established in a signaling interaction process for initiating a service, receive a bandwidth assignment request sent by the base station subsystem device for the service, and assign satellite bandwidth for the service according to the bandwidth assignment request; or after the user plane is released in a signaling interaction process for terminating the service, receive a bandwidth release request sent by the base station subsystem device for the service, and release, according to the bandwidth release request, satellite bandwidth assigned for the service; and
the base station subsystem device is configured to: before the user plane is established in the signaling interaction process for initiating the service, send the bandwidth assignment request for the service to the satellite device; or after the user plane is released in the signaling interaction process for terminating the service, send the bandwidth release request for the service to the satellite device.
